Europäisches Patentamt

European Patent Office

Office européen des brevets

(19)

(11) Veröffentlichungsnummer: **0 089 074**
**B1**

(12) # EUROPÄISCHE PATENTSCHRIFT

(45) Veröffentlichungstag der Patentschrift:
30.04.86

(51) Int. Cl.⁴: **H 02 G 1/12, H 01 R 43/00**

(21) Anmeldenummer: **83200232.3**

(22) Anmeldetag: **15.02.83**

(54) **Anordnung zum Trennen einzelner Leiter voneinander in einem Flachbandkabel.**

(30) Priorität: **15.03.82 SE 8201600**

(43) Veröffentlichungstag der Anmeldung:
**21.09.83 Patentblatt 83/38**

(45) Bekanntmachung des Hinweises auf die Patenterteilung:
**30.04.86 Patentblatt 86/18**

(84) Benannte Vertragsstaaten:
**CH DE FR GB IT LI SE**

(56) Entgegenhaltungen:
**US - A - 3 314 321**
**US - A - 3 771 398**
**US - A - 4 275 630**

(73) Patentinhaber: **C.A. Weidmüller GmbH & Co.,**
**Postfach 950 Paderborner Strasse 175,**
**D-4930 Detmold 14 (DE)**

(72) Erfinder: **Undin, Hans, Stora Skogsrundan 55,**
**S-184 00 Akersberga (SE)**
Erfinder: **Wiener, Hans, Drakskeppsvägen,**
**S-183 63 Täby (SE)**

(74) Vertreter: **Klauber, Tomas, Patentbyran Klauber & Co.**
**AB Kungsgatan 44, S-111 35 Stockholm (SE)**

LIBER, STOCKHOLM 1986

## Beschreibung

Die Erfindung bezieht sich auf eine Anordnung zum Trennen einzelner Leiter voneinander in einem Flachbandkabel gemäß dem ersten Teil des Anspruches 1a.

Um die Enden der einzelnen Leiter eines Flachbandkabels an entsprechende Anschlussorgane (z.B. Klemmen) anschliessen zu können, die im allgemeinen grösseren gegenseitigen Abstand aufweisen als die Leiter im Flachbandkabel, müssen die Endpartien der Leiterelemente voneinander getrennt werden, wobei jedes Leiterelement eineleitende Ader und eine sie umschliessende Isolationsschicht aufweist. Vor oder nach der Trennung muss die Isolationsschicht von der äussersten Endpartie entfernt werden um elektrischen Kontakt mit dem jeweiligen Anschlusselement zu ermöglichen.

Anordnungen zum Trennen einzelner Leiter eines Flachbandkabels sind z.B. in den Patentschriften US-A-3 314 321 US-A-3 771 398 und US-A-4 275 630 beschrieben. Es handelt sich hierbei durchwegs um stationäre, auf eine Tischplatte od. dgl. befestigbare Apparate, die mittels einer Handkurbel betätigt werden. Das Flachbandkabel wird an zumindest einem drehbaren, zylindrischen Isolationsschneideorgan vorbeigeführt welches mit einer Vielzahl von herausragenden Schneidkantenorganen versehen ist. Gemäss US-A-4,275,630 umfassen die Schneidkantenorgane nicht den vollen Umfang des Zylinders, so dass eine kürzere nichtschneidende Strecke entsteht welche das Einführen des Kabels in den Apparat erleichtert.

Die vorliegende Erfindung stellt sich die Aufgabe, eine Anordnung zu schaffen, die als ein handbetätigtes zangenartiges Werkzeug hergestellt und angewandt werden kann.

Die Erfindung, wie sie im Anspruch 1 gekennzeichnet ist, löst diese Aufgabe. Die durch die Erfindung erreichten Vorteile sind im wesentlichen darin zu sehen, dass die Anordnung äusserst einfach anwendbar ist.

Im folgenden wird die Erfindung anhand von Ausführungsbeispielen gemäss beigefügten schematischen Zeichnungen näher erläutert. Hierbei zeigt:

Fig. 1 die Endpartie eines Flachbandkabels,
Fig. 2 einen Querschnitt entlang der Ebene II-II in Fig. 1,
Fig. 3 die Seitenansicht einer Ausführungsform der erfindungsgemässen Anordnung,
Fig. 4 eine Seitenansicht in grösserem Massstab des Arbeitsteiles des Gerätes gemäss Fig. 3,
Fig. 5 einen Querschnitt entlang der Ebene IV-IV in Fig. 4,
Fig. 6 eine Ansicht in noch grösserem Massstab als Fig. 5 eines Teiles des Gerätes gemäss Fig. 5 und
Fig. 7 einen Querschntt in kleinerem Maßstab entlang der Ebene VII-VII in Fig. 5, wobei die dargestellten Teile um ihre Drehachsen um 90° gedreht sind.

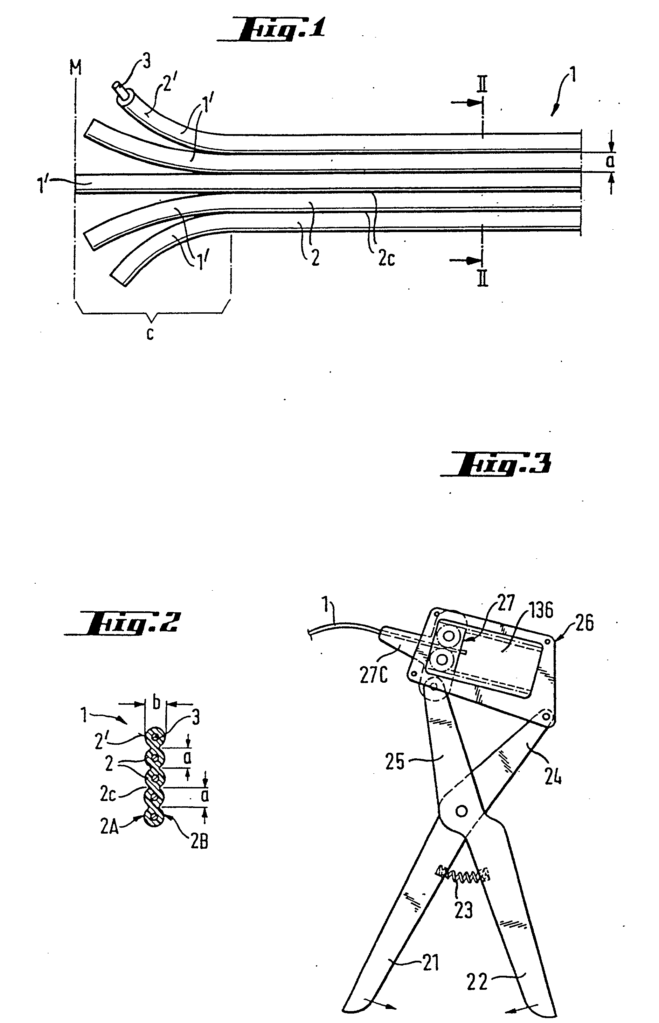

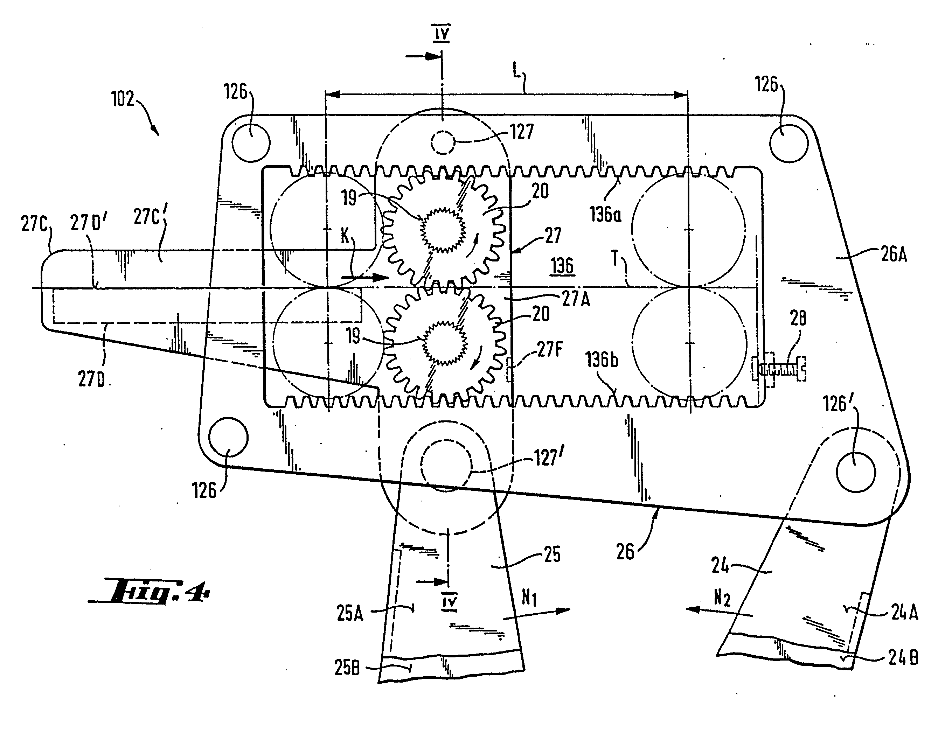

In Fig. 1 und 2, die nicht die Erfindung darstellen, ist ein Flachbandkabel 1 dargestellt, welches eine Isolationsschicht 2, z.B. aus Gummi oder Kunstoffmaterial, und eine Vielzahl (fünf im dargestellten Beispiel) von Leitern 3 oder leitenden Adern aufweist, die in der Isolationsschicht nebeneinander liegend eingebettet sind. Mittig zwischen je zwei benachbarten Leitern 3 verläuft an jeder flachen Seite 2A, 2B des Kabels eine Einkerbung 2c als eine längliche Trennlinie entlang der ganzen Länge des Flachbandkabels 1. Der gegenseitige Abstand der Trennlinien ist mit $a$ bezeichnet. Das Flachbandkabel 1 hat seine grösste Dicke $b$ jeweils mittig zwischen zwei benachbarten Trennlinien weil dort die Isolationsschiht 2 am meisten über die eingebetteten Leiter 3 ausbuchtet, wie aus Fig. 2 ersichtlich ist.

Um die einzelnen Leiter 3 an entsprechende (nicht dargestellte) Anschlusselemente wie Klemmen u.s.w. anschliessen zu können, die im allgemeinen grössere gegenseitige Abstände als die Leiter im Flachbandkabel aufweisen, muss die Endpartie des 1 entlang einer vorgewählten Länge $c$ in einzelne Leiterelemente 1' aufgeteilt werden, von denen jedes einen Leiter 3 und einen ihn umschliessenden Teil 2' der früher einstückigen Isolationsschicht 2 umfasst. Damit ein getrenntes Leiterelement 1' an ein Anschlusselement leitend angeschlossen werden kann, muss ferner noch die Isolation von der äussersten Endpartie des Leiterelementes entfernt werden. Dies kann, und zwar konventionell entweder individuell geschehen, d.h. nachdem die Leiterelemente voneinander getrennt worden sind, wie dies in Fig. 1 bei dem obersten Leiterelement 1' dargestellt ist, oder gemeinsam, d.h. vor der Trennung, beispielsweise mittels eines Abisoliergerätes welches in der DE-A-31 34 312 angegeben ist.

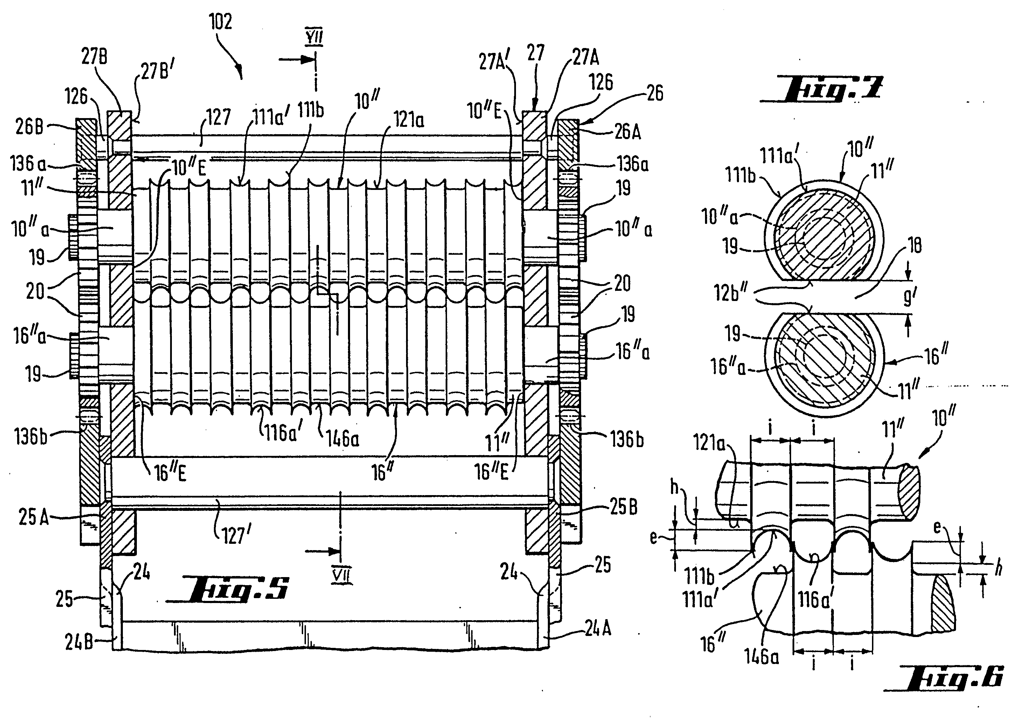

In Fig.3 ist ein zangenförmiges Handgerät gemäss der vorliegenden Erfindung dargestellt, wobei dessen wichtigste Bestandteile in den Fig.4 bis 7 in grösserem Maßstab gezeigt werden.

Das Handgerät 102 Tesitzt ein Paar schwenkbar miteinander verbundener Handgriffe 21, 22 die von einer Druckfeder 23 voneinander gedrückt werden. jeder Handgriff weist einen Schenkelteil 24, 25 auf und die freien Enden dieser Schenkelteile bewegen sich zu- oder voneinander, wenn die Handgriffe 21, 22 von einem Benutzer zueinander gedrückt oder von der druckfeder 23 voneinander entfernt werden. Der Schenkelteil 24 ist an seinem freien Ende an einen Käfig 26 schwenkbar angeschlossen in dem ein Rahmenglied 27 verschiebbar angeordnet ist, welches seinerseits an das freie Ende des anderen Schenkelteiles 25 schwenkbar angeschlossen ist. In Fig. 3 ist ferner dargestellt, wie ein Flachbandkabel mit Hilfe eines Einführorgans 27C in das Rahmenglied 27 eingespeist wird.

Wie aus den Fig. 4 und 5 ersichtlich ist, weist der Käfig 26 zwei in Abstand voneinander angeordnete Seitenwände 26A, 26B auf die mittels dreier Abstandsbolzen 126 und eines Abstandsbolzens 126', der gleichzeitig als Schwenkzapfenorgan gegenüber dem Schenkelteil 24 wirkt, miteinander verbunden sind. Der Schenkelteil 24 weist vorzugsweise zwei im Abstand voneinander liegende Seitenwände 24A, 24B auf, von denen jede neben einer der Seitenwände 26A, 26B des Käfigs 26 liegt und eine viereckige Öffnung bzw. ein Fenster 136 aufweist, dessen zwei einander gegenüber liegende Längskanten mit je einer geradlinigen Zahnreihe 136a, 136b versehen sind.

Im Käfig 26 ist das Rahmenglied 27 angeordnet, welches zwei Seitenwände 27A, 27B aufweist die mittels eines Abstandszapfens 127 und eines Abstandszapfens 127', der zugleich ein Schwenkzapfenorgan gegenüber dem Schenkelteil 25 bildet, verbunden sind. In ähnlicher Weise wie der Schenkelteil 24 weist auch der Schenkelteil 25 zwei in Abstand voneinander angeordnete Seitenwände 25A, 25B auf, welche jeweils zwischen die Seitenwände 26A und 27A bzw. 26B und 27B eingeschoben sind. In Lageröffnungen 137a, 137b in den Seitenwänden 27A, 27B des Rahmenglieds 27 sind Wellen 10''a, 16''a angeordnet, die ein im wesentlichen zylindrisches Isolationsschneideorgan 10'', und ein im wesentlichen zylindrisches Widerlagerorgan 16'' drehfest tragen.

An etwas verjüngten Endpartien der Wellen 10''a, 16''a sind mit Hilfe von Kerbverzahnungen 19 vier identische Zahnräder 20 drehfest angeordnet. jedes dieser Zahnräder greift mit einer benachbarten Zahnreihe 136a, 136b und mit einem benachbarten Zahnrad 20 ein.

Die wirksame Länge $L$ der Zahnreihen 136a, 136b entspricht zumindest der Länge des Wälzkreises der Zahnräder 20, so dass diese Zahnräder bei Abwälzung eine volle Umdrehung von 360° (oder ein ganzzahliges Vielfaches solcher Umdrehungen, wenn $L$ einer Vielzahl von Wälzkreisen entspricht) durchführen. Vorzugsweise wird die Länge der Zahnreihen 136a, 136b und der Fenster 136 so gewählt, dass genau eine volle Umdrehung, oder genau ein ganzzahliges Vielfaches von vollen Umdrehungen zustande kommt. Ein einstellbares Anschlagorgan, beispielsweise eine einstellbare Schraube 28, die mit einem die beiden Seitenwände 27A, 27B verbindenden Band 27F zusammenarbeitet; kann zur genauen Festlegung dieses Verhältnisses vorgesehen werden.

Das Isolationsschneideorgan 10'' und das Unterlags- oder Widerlagerorgan 16'' haben im dargestellten Beispiel identische Form und werden von einem in zwei verschiedenen Lagen montierten Konstruktionsteil gebildet, wie später noch nähert erläutert wird.

Das Isolationsschneideorgan 10'' und das Widerlagerorgan 16'' besitzen einen zylindrischen Körper 11'' an dessen Oberfläche eine Vielzahl von Umkreisnuten 111a', 116a' mit bogenförmigem, konkavem Profil angeordnet sind. Diese Umkreisnuten 111a', 116a' wechseln mit Nuten 121a, 146a ab welche einen flachen, von der Oberfläche der genannten zylindrischen Körper 11'' gebildeten Boden aufweisen und in gleicher Anzahl wie die Umkreisnuten 111a', 116a' vorhanden sind. Die tiefste Stelle der Umkreisnuten 111a', 116a' liegt um eine Strecke $h$ (Fig. 6) höher als der Boden der Nuten 121a, 146a.' Scharfe Kämme 111b zwischen den Umkreisnuten 111a' bzw. 116a' und den Nuten 121a bzw. 146a bilden Schneidkantenorgane, die von einem weniger als 360° umfassenden Kreisbogen begrenzt sind, der sich zwischen zwei Endpunkten erstreckt. Den Rest des Umfanges bildet eine gerade, unscharfe, nicht schneidende Strecke 12b'', die an jedem Ort zwischen den Endpunkten von der Drehachse weniger entfernt ist als eine Radius der Kreisbogenförmigen Kante 111b dargestellte Länge, d.h., die Strecke 12b'' ist gegenüber der Kante 111b eingezogen.

Die Kante 111b erstreckt sich im dargestellten Beispiel über einen Zentrumswinkel $\alpha$ von etwa 270°.

In Abhängigkeit davon, wie die Endpartie des Kabels vom Anfang an in den Apparat eingeleg wird, kann vor dem getrennten Abschnitt (Länge c in Fig. 1) ein beliebig langer ungetrennter Abschnitt erhalten werden. Auf diese Weise kann ein ungetrennter Endabschnitt erhalten werden, der eine passende Länge für die vorher erwähnte "gemeinsame" Isolationsabstreifung aufweist, obwohl ein dicht daran anschliessender "innerer" Abschnitt bereits in einzelne Leiterelemente getrennt ist. In diesem Zusammenhang ist anzuführen dass der getrennte Abschnitt an eine beliebige Stelle des Kabels, also auch weit von seinen beiden Enden entfernt, verlegt werden kann, indem das Kabel in entsprechender Lage in den Einführungsspalt eingelegt wird, wobei die Länge des getrennten Abschnittes, ganz von der Lage unabhängig, durch die Anzahl der Umdrehungen bestimmt wird.

Die Tiefe $e$ (Fig. 6) der Umkreisnuten 111a', 116a' ist kleiner als die Dicke $b$ (Fig. 2).

Die Nuten beider Arten, d.h. mit konkavem und mit ebenem Boden, haben im wesentlichen gleiche Breite $i$, so dass die erhöhten Nuten mit dem konkaven Profil an einem der Organe, bzw. deren Randgebiete, in die Nuten mit dem flachen Boden am anderen der Organe, und umgekehrt, eindringen können, wie in Fig. 6 dargestellt ist. Ein Kabel 1 wird somit zwischen dem Isolationsschneideorgan 10'' und dem Widerlagerorgan 16'' kräftig verpresst, und zwar abwechselnd in der einen und in der anderen Richtung, wodurch sowohl ein Hindurchführen durch das Handgerät 102, als auch die Durchschneidung der Trennlinien gefördert wird.

Dank des Umstandes, dass die Nuten beider Typen an jedem der beiden Organe in gleicher Anzahl vorgesehen sind, ergibt sich, dass jedes dieser Organe an einem Ende eine konkave, und am anderen Ende eine flache Nut aufweist. Wenn nun die Organe verkehrt aneinander gelegt werden, wie in Fig.5 dargestellt, passen die erhöhten konkaven Nuten des einen Organs in die flachen Nuten des anderen Organs hinein, und die Stirnflächen wie 10″ E und 16″ E beider Organe liegen in gleicher Ebene und auch in gleicher Ebene wie die angrenzende Fläche einer der Seitenwände 27A′, 27B′ des Rahmenglieds 27.

In der dargestellten Ausführungsform besteht kein Unterschied zwischen einem Isolationsschneideorgan und einem Widerlagerorgan, weil beide Organe sowohl eine Schneidfunktion als auch eine Anpressfunktion ausführen und identische Form haben. Man kann somit sagen, dass ein Flachbandkabel 1 zwischen zwei identischen, verkehrt montierten Isolationsschneide- und Widerlagerorganen hindurch geführt wird.

Aus Fig.5 geht auch hervor, dass die dicht anliegende Innenfläche 27B′ der Seitenwand 27B ein besonderes Seitenanschlagorgan unnötig macht.

Das Isolationsschneideorgan 10″ und das Widerlagerorgan 16″ weisen auch identische nichtschneidende Gebiete 12b″ auf, die in Fig. 7 in ihrer Ausganglage, die mit der Endlage identisch ist, dargestellt sind, und in der sich diese Gebiete gegenüber liegen, so dass ein Einführungs- bzw. Entnahmespalt 18 entsteht, dessen Breite $g'$ grösser als der Abstand $i$ in Fig. 2 ist. Es ist jedoch einzusehen, dass eines der beiden Organe auch Schneidkanten (Kämme 111b) aufweisen kann, die sich entlang des ganzen Umfanges, also über 360° erstrecken, wenn am anderen Organ das nichtschneidende Gebiet 12b″ zureichend eingezogen ist, um alleine einen Spalt 18 mit genügender Breite $g'$ zu bilden.

Die dargestellte Ausführungsform hat jedoch den offensichtlichen Vorteil, dass nicht zwei verschiedene Konstruktionsteile hergestellt werden müssen.

Grundsätzlich wird nur ein Zahnrad an einem Ende jedes Organs und bloss eine Zahnreihe 136a oder 136b benötigt. Die Zahnreihe treibt das benachbarte Zahnrad, und dieses treibt das eingreifende Zahnrad an. Alternativ kann jedes Zahnrad mit der zugeordneten Zahnreihe aber nicht mit einem anderen Zahnrad eingreifen. Aus den Fig. 4 und 5 ist jedoch erkenntlich, dass dank dem Umstand, dass die Zahnräder miteinander eingreifen, und jedes ausserdem mit einer Zahnreihe eingreift, die Lage des Rahmengliedes 27 im Käfig 26 stabilisiert wird, so dass weder das Rahmenglied 27 noch der Käfig 26 um den Abstandsbolzen 126′ bzw. den Abstandszapfen 127′ kippen können. Die ineinander eingreifenden Teile 136a, 20, 136b bilden somit ein System zur Stabilisierung des Rahmengliedes und des Käfigs die an den Schenkelteilen 24, 25 frei angelenkt sind. Der Umstand, dass die Zahnreihen und die Zahnräder an beiden Seiten des Isolationsschneideorgans 10″ und des Widerlagerorgans 16″ sowie des Käfigs 26 angeordnet sind, trägt zum verklemmungsfreien Betrieb bei.

Beim Zusammensetzen des Handgerätes 102 wird das Rahmenglied in eine seiner Endlagen im Käfig 26 gebracht und an eine der Wellen 10″a oder 16″a werden die Zahnräder 20 montiert. Dann werden die beiden Organe in ihre Ausgangslage gemäss Fig. 7 gedreht, und Zahnräder 20 werden auf die Welle des zweiten Organes aufgesetzt, wonach alle Zahnräder in irgendeiner bekannten Weise axial gesichert werden. Kerbverzahnungen 19 an den Zahnrädern 20 und an den Wellen 10″a und 16″a sichern eine drehfeste Verbindung und ermöglichen die Zahnräder in einer Vielzahl von Drehlagen auf die Wellen aufzusetzen.

Aus jeder Seitenwand 27A, 27B des Rahmengliedes 27 ragt ein Arm 27C′ hervor und zwischen diesen beiden Armen ist eine Leitplatte 27D angeordnet, deren obere Fläche 27D″ in der gemeinsamen Tangentialebene T der beiden Organe liegt und ein Leitorgan 27C bildet.

Der Handapparat 102 arbeitet auf folgende Weise: Die Druckfeder 23 hält den Apparat in Ausgangsstellung bei der die Handgriffe 21, 22 und die Schenkelteile 24, 25 maximal voneinander entfernt sind. Das Rahmenglied 27 befindet sich gemäss Fig.3 am linken Ende der Fenster 136 und die Organe nehmen ihre in Fig. 7 dargestellte Ausgangsstellung ein, in welcher der Einführungsspalt 18 zustande kommt. Unterschiedlich von der in Fig. 7 gezeigten Konstruktion können die Gebiete 12b″ auch tangential zur Oberfläche des Isolationsorgans 10″ und des Widerlagerorgans 16″ oder zum Boden der Umkreisnuten 111a′, 116a′ verlaufen, weil der Einführspalt 18 durch Addition der betreffenden "Spalte" an den beiden Organen entsteht, und folglich auch dann eine Breite $g'$, grösser als die Breite $b$ aufweisen kann wenn jeder der einzelnen Spalte für sich kleiner als die Breite $b$ ist.

Ein Flachbandkabel 1 wird entlang der Fläche 27D′ des Leitorganes 27C so weit in den Handapparat eingeführt, bis der gewünschte Anfangspunkt einer gewünschten Länge $c$ zwischen den Organen zu liegen kommt. Dieser Anfangspunkt kann am Ende $M$ des Flaschbandkabels 1 liegen, oder auch um einen beliebigen Abstand von diesem Ende entfernt sein. Danach werden die Handgriffe 21, 22 wie bei einer gewöhnlichen Zange zusammengedrückt, wodurch die Schenkelteile 24, 25 im Sinne der Pfeile $N_1$, $N_2$ bewegt werden und das Rahmenglied 27 gezwungen wird sich im Käfig 26 im Sinne des Pfeiles $K$ zu bewegen, bis es am anderen Ende der Fenster 136 anlangt und an das Anschlagorgan (Schraube 28) anstösst. Weil hierbei die Zahnreihen 136a, 136b in die Zahnräder 20 eingreifen, werden die Organe durch diese Bewegung in Umdrehung versetzt und führen eine volle Umdrehung durch bis sie ihre mit der Ausgangslage identische Endlage erreicht habe. Während und zufolge dieser Drehung wurde das Flachbandkabel 1 zwischen den Organen hindurchgezogen und entlang jeder Einkerbung 2c durchschnitten, und kann jetzt dank des Einführspaltes 18 aus dem Handapparat mühelos entfernt werden. Danach werden die Handgriffe 21, 22 losgelassen und die Druckfeder 23 bringt den Handapparat in die Ausgangsstellung zurück.

Die Länge C der Trennstrecke gleicht im wesentlichen der Länge der bogenförmigen Schneidkanten 12a und sie kann ein ganzzahliges Vielfaches davon bilden, wenn die Zahnreihen 136a, 136b entsprechend linger gestaltet werden, oder wenn der Vorgang wiederholt wird, nachdem das Ende der ersten Trennstrecke (Länge c) errichtet worden ist.

Aus Fig. 5 geht hervor, dass die Organe in ihren einander zugewandten Teilen ein komplementäres Profil aufweisen. Es ist jedoch offensichtlich, dass der Apparat auch dann betriebsfähig sein wird, wenngleich mit etwas grösserer Reibung, wenn als Widerlagerorgan ein fester Teil mit zum Profil des Schneideorganes komplementärem Profil gewählt wird, beispielsweise eine Unterlagsplatte deren obere Fläche ein Profil aufweist, das komplementär zu dem Profil des zylindrischen Isolationsschneideorgans 10″ ist.

Im Rahmen der Erfindung kann beispielsweise die zum Antrieb der Zahnräder 20 benötigte Relativbewegung des Rahmengliedes gegenüber dem Käfig auch dann stattfinden, wenn sich die Schenkelteile 24, 25 voneinander bewegen, vorausgesetzt, dass das Rahmenglied 27 verkehrt in den Käfig 26 eingesetzt wird, d.h. mit dem Leitorgan 27C nach rechts gerichtet.

**Patentansprüche**

1. Anordnung zum Trennen einzelner Leiter (3) voneinander in einem Flachbandkabel (1), welches in einer gemeinsamen Isolationshülle (2) eine Vielzahl von nebeneinander angeordneten Leitern (3) aufweist, wobei zwischen je zwei benachbarten Leitern (3) in der Isolationshülle (2) längliche Einkerbungen (2c) verlaufen, die Trennlinien bilden, welche Anordnung ein zum Aufschneiden der Isolationshülle (2) entlang der einzelnen Trennlinien vorgesehenes Isolationsschneideorgan (10″) aufweist, welches um eine zur Längsrichtung des eingelegten Flachbandkabels (1) senkrechte Drehachse drehbar und mit einer Vielzahl von herausragenden Schneidkantenorganen versehen ist, die in Abständen voneinander angeordnet sind, welche den Abständen (a) zwischen zwei benachbarten Trennlinien in der Isolationshülle (2) entsprechen und deren Umfang die Form eines zur genannten Drehachse zentrischen und weniger als 360° umfassenden Kreisbogens hat, wobei zwischen den Endpunkten des kreisbogenförmigen Teiles eine eingezogene, nichtschneidende Strecke (12b″) vorhanden ist, bei welcher Anordnung ein dem Isolationsschneideorgan (10″) benachbartes Auflagerorgan (16″) derart angeordnet ist, dass ein eingelegtes Flachbandkabel (1) gegen die kreisbogenförmigen Teile der Schneidkantenorgane (111b) gepresst wird und zumindest dieeine nichtschneidende Strecke (12b″) einen Einführungs- und Entnahmespalt (18) mit grösserer Breite (g') als die maximale Dicke (b) des eingelegten Flachbandkabels (1) bildet, und die Anordnung ein Antriebsorgan (24, 25, 136a, 136b, 20) zur Drehung des Isolationsschneideorgans (10″) um zumindest eine volle Umdrehung aufweist, wobei das Isolationsschneideorgan (10″) mit zumindest einem Antriebszahnrad (20) drehfest verbunden und zusammen mit dem Auflagerorgan (16″) in einem Rahmenglied (27) untergebracht ist, dadurch gekennzeichnet, dass das Rahmenglied (27) in einem Käfig (26) mit im Abstand zueinander liegenden Seitenwänden (27A, 27B) verschiebbar angeordnet ist, wobei zumindest eine der Seitenwände mit zumindest einer geradlinigen Zahnreihe (136a, 136b) versehen ist und das zumindest eine Antriebszahnrad (20) in diese Zahnreihe eingreift, so dass bei der Bewegung des Rahmengliedes (27) im Käfig (26) in Richtung der Zahnreihe (136a, 136b) das Isolationsschneideorgan (10″) zur Drehung angetrieben wird, und dass das Antriebsorgan von einem Paar zangenartig gelenkig miteinander verbundener und je einen Schenkelteil (24, 25) tragender Handgriffe (21, 22) gebildet ist, wobei das Rahmenglied (27) an das freie Ende des einen Schenkelteiles (25) und der Käfig (26) an das freie Ende des anderen Schenkelteiles (24) angeschlossen ist.

2. Anordnung nach Patentanspruch 1, dadurch gekennzeichnet, dass das Auflagerorgan (16″) eine im wesentlichen zylindrische Form aufweist und um eine Drehachse drehbar ist, die parallel zur Drehachse des Isolationsschneideorgans (10″) verläuft, wobei das Auflagerorgan (16″) an zumindest einem Ende drehfest mit einem Antriebszahnrad (20) verbunden ist welches in eine Zahnreihe (136b) einer Seitenwand (26A, 26B) und/oder in eines der Antriebszahnräder (20) des Isolationsschneideorgans (10″) zwecks Antriebs eingreift.

3. Anordnung nach Patentanspruch 2, dadurch gekennzeichnet, dass das Auflagerorgan (16″) und das Isolationsschneideorgan (10″) identisch aufgebaut sind.

4. Anordnung nach einem der vorhergehenden Patentansprüche, dadurch gekennzeichnet, dass das Isolationsschneideorgan (10″) und das Rahmenglied (27) so angeordnet sind, dass das Isolationsschneideorgan (10″) von einer vorbestimmten Ausgangsstellung aus genau eine volle Umdrehung oder genau ein ganzzahliges Vielfaches von vollen Umdrehungen durchfährt, um in eine mit der Ausgangsstellung drehlagemässig identische Endstellung zu gelangen.

5. Anordnung nach einem der vorhergehenden Patentansprüche, dadurch gekennzeichnet, dass die kreisbogenförmigen Teile der Schneidkantenorgane sich in einem Bereich (α) von 180° bis 340° erstrecken.

6. Anordnung nach einem der vorhergehenden Patentansprüche, dadurch gekennzeichnet, dass jeweils ein Paar benachbarter kreisbogenförmiger Schneidkantenorgane von den erhöhten Randgebieten (111b) einer Umfangsnut (111a')

mit konkavem bogenförmigem Profil gegebener Tiefe (e) gebildet wird.

7. Anordnung nach Patentanspruch 6, dadurch gekennzeichnet, dass die genannten Umfangsnuten (111a') abwechselnd mit Umfangsnuten (121a) grösserer Tiefe (e + h) angeordnet sind.

8. Anordnung nach einem der vorhergehenden Patentansprüche, dadurch gekennzeichnet, dass die Schneidkantenorgane weniger als die maximale Dicke (b) eines eingelegten Flachbandkabels (1) über die unmittelbar benachbarten Teile des Isolationsschneideorgans (10") vorragen, so dass das Flachbandkabel (1) zwecks besseren Transports durch die Anordnung hindurch zwischen das Isolationsschneideorgan (10") und das Auflagerorgan (16") gepresst wird.

9. Anordnung nach einem der vorhergehenden Patentansprüche, dadurch gekennzeichnet, dass dest eine der Seiterwände (26A, 26B) des Käfigs (26) mit einer Öffnung (136) versehen ist, deren zumindest eine Kante als Zahnreihe (136a, 136b) ausgebildet ist.

10. Anordnung nach einem der Patentansprüche 2 bis 9, dadurch gekennzeichnet, dass sowohl das Isolationsschneideorgan (10") als auch das Auflagerorgan (16") an beiden Seiten mit je einem Antriebszahnrad (20) versehen sind und dass der Käfig (26) an jeder Seite je zwei geradlinige Zahnreihen (136a, 136b) aufweist, wobei jedes der Zahnräder in ein benachbartes Zahnrad und eine benachbarte Zahnreihe eingreift.

11. Anordnung nach einem der vorhergehenden Patentansprüche, dadurch gekennzeichnet, dass am Rahmenglied (27) ein Leitorgan (27C) für ein zu bearbeitendes Flachbandkabel (1) angeordnet ist.

12. Anordnung nach einem der vorhergehenden Patentansprüche, dadurch gekennzeichnet, dass am Käfig (26) ein mit dem Rahmenglied (27) zusammenarbeitendes Anschlagorgan (28) zur genauen Festsetzung der Bewegung des Rahmengliedes (27) im Käfig vorgesehen ist.

**Claims**

1. Arrangement for separating single conductors (3) from each other in a flat ribbon cable (1) which comprises in a common insulating sheathing (2) a plurality of conductors (3) arranged side by side, longitudinal grooves (2c), defining separation lines, extending in the insulating sheating between each two adjacent conductors (3), said arrangement comprising an insulation cutting means (10") for cutting up the insulating sheathing (2) along thevarious separation lines, which means is rotable about a rotational axis perpendicular to the longitudinal direction of an insereted flat ribbon cable (1) and is provided with a plurality of projecting cutting edge means spaced one from another in accordance with the spacements (a) between two adjacent separating lines in the insulating sheathing (2), and having a circumference in the shape of a circular arc centered on said rotational axis and extending over less than 360° a retracted, non cutting interval (12b") extending between the ends of the arcuate part, and in which arrangement a counter-bearings means (16"), adjacent the insulation cutting means (10), is arranged in such a way that an inserted flat ribbon cable (1) is forced against the arcuate parts of the cutting edge means (111b), and at least the non cutting edge (12b") defines a feed-in and feed-out slot (18) having greater width (g') than the maximum thickness (b) of the inserted cable, and the arrangement comprising a driving means (24, 25, 136a, 136b, 20) for rotation of the insulation cutting means (10") with at least one full turn, the insulating cutting means (10") being non rotarily connected with at least one driving gear wheel (20) and together with the counter-bearing means (16") accommodated in a frame member (27), characterised by the frame member (27) being translatorily mounted in a cage (26) having side walls (27A, 27B) spaced one from another, at least one side wall being provided with at least one rectilinear gear rack (136a, 136b) and said at least one gear wheel (20) meshing with said gear rack so that when the frame member (27) is moved in the cage (26) in the direction of the gear rack (136a, 136b) the insulation cutting means (10") is driven to rotate, the driving means being embodied by a pair of handles (21, 22) pivoted one to another as in a pair of pliers and each carrying leg member (24, 25), the frame member (27) being connected to the free end of one leg member (25) and the cage (26) to the free end of the other leg member (24).

2. The arrangement of claim 1, characterised by the counter-bearing means (16") having substantially cylindrical shape and being rotatable about a rotational axis which extends parallel to the rotational axis of the insulation cutting means (10"), and the counter-bearing means (16") being at least at one end non rotarily connected with a driving gear wheel (20) meshing,in order to be driven, with a gear rack (136b) of a side wall (26A, 26B) and/or with one of the driving gear wheels (20) of the insulation cutting means (10").

3. The arrangement according to claim 2, characterised by the counter-bearing means (16") and the insulation cutting means (10") being identically constructed.

4. The arrangement according to one of the preceding claims, charaterised by the insulation cutting means (10") and the frame member (27) being arranged so that the insulation cutting means (10") from a pre-selected initial position performs exactly one full turn, or exactly a wholenumber-multiple of full turns,in order to reach a final position which, in terms of rotational position, is identical with the initial position.

5. The arrangement according to one of the preceding claims, characterised by the arcuate parts of the cutting edge means having an extent (α) of 180° to 340°

6. The arrangement according to one of the preceding claims, characterised by each pair of adjacent arcuate cutting edge means being embodied by elevated marginal zones (111b) of a peripheric groove (111a') having a concave, arcuate profile with a given depth (e).

7. the arrangement of claim 6, characterised by said peripheric grooves (IIIa') alternating with peripheric grooves (121a) having a greater depth (e + h).

8. The arrangement according to one fo the preceding claims, characterised by the cutting edge means projecting less than the maximum thickness (b) of an inserted flat ribbon cable (1) over the immediately adjacent parts of the insulation cutting means (10''), whereby the flat ribbon cable (1) is squeezed between the insulation cutting means (10'') and the counter-bearing means (16'') for better transport through the device.

9. The arrangement according to one of the preceding claims, characterised by at least one of the side walls (26A, 26B) of the cage (26) being provided with an opening (136) having at least one edge shaped as a gear rack (136a, 136b).

10. The arrangement according to one of the claims 2 to 9, characterised by the insulation cutting means (10'') as well as the counter-bearing means (I6'') being at each side provided with a driving gear wheel (2O) and the cage (26) being at each side provided with two rectilinear gear racks (136a, 136b), each gear wheel meshing with an adjacent gear wheel and an adjacent gear rack.

11. The arrangement according to one of the preceding claims, characterised by a guiding means (27C) being arranged on the frame member (27).

12. The arrangement according to one of the preceding claims, characterised by stop means (28) co-operationg with the frame member (27) being mounted on the cage (26) in order to exactly define the movement of the frame member (27) in the cage.


## Revendications

1.- Dispositif pour séparer les uns des autres les conducteurs élémentaires (3) d'un câble plat (1) qui comprend, à l'intérieur d'une gaine isolante commune (2), une pluralité de conducteurs (3) disposés les uns à côté des autres, cependant que des cannelures allongées (2c) qui forment des lignes de séparation s'étendent dans la gaine isolante (2), dans les intervalles entre deux conducteurs (3) voisins, lequel dispositif présente un organe de découpage de l'isolant (10'') prévu pour découper la gaine isolante (2) le long des diverses lignes de séparation, qui tourne autour d'un axe de rotation perpendiculaire à la direction longitudinale du câble plat (1) introduit, et est muni d'une pluralité d'organes saillants à arête tranchante qui sont disposés à des distances d'écartement mutuel qui correspondent aux distances (a) existant entre deux lignes de séparation voisines de la gaine isolante (2) et dont la périphérie a la forme d'un arc de cercle centré sur ledit axe de rotation et couvrant moins de 360°, tandis qu'il existe entre les extrémités de la partie en arc de cercle un segment en retrait et non coupant (12b''), dispositif dans lequel un organe d'appui (16'') adjacent à l'organe de découpage de l'isolant (10'') est agencé de telle manière qu'un câble plat (1) introduit soit pressé contre les parties en arc de cercle des organes à arête tranchante (111b) et que le segment non coupant (12b'') forme une fente d'entrée et d'extraction (18) possédant une largeur (g') supérieure à l'épaisseur maximale (b) du câble plat (1) introduit, et le dispositif présente un organe d'entrainement (24, 25, 136a, 136b, 20) servant à faire tourner l'organe de découpage de l'isolant (10'') d'au moins un tour complet, l'organe de découpage de l'isolant (10'') étant relié solidairement en rotation à au moins une roue dentée d'entrainement (20) et étant logé dans un cadre conjointement avec l'organe d'appui (16''), caractérisé en ce que le cadre (27) est disposé mobile en translation dans une cage (26) qui possède des parois latérales situées à un certain écartement mutuel, au moins l'une des parois latérales étant munie d'au moins une rangée de dents rectiligne (136a, 136b), et au moins une roue dentée d'entrainement (20) engrenant avec cette rangée de dents, de sorte que, lors du déplacement du cadre (27) dans la cage (26) parallèlement à la rangée de dents (136a, 136b), l'organe de découpage de l'isolant (10'') est entrainé en rotation, et en ce que l'organe d'entrainement est formé par une paire de poignées (21, 22), reliées l'une à l'autre par une liaison articulée à la façon d'une pince, et dont chacune porte une branche (24, 25), le cadre (27) étant relié à l'extrémité libre de l'une des branches (25) et la cage (26) à l'extrémité libre de l'autre branche (24).

2.- Dispositif selon la revendication 1, caractérisé en ce que l'organe d'appui (16'') présente une forme sensiblement cylindrique et peut tourner autour d'un axe de rotation qui s'étend parallèlement à l'axe de rotation de l'organe de découpage de l'isolant (10''), l'organe d'appui (16'') étant relié, solidairement en rotation, au moins à une extrémité à une roue dentée d'entrainement (20) qui engrène pour l'entrainement avec une rangée de dents (136b) d'une paroi latérale (26A, 26B) et/ou avec l'une des roues dentées d'entrainement (20) de l'organe de découpage de l'isolant (10'').

3.- Dispositif selon la revendication 2, caractérisé en ce que l'organe d'appui (16'') et l'organe de découpage de l'isolant (10'') sont de construction identique.

4.- Dispositif selon l'une des revendications précédentes, caractérisé en ce que l'organe de découpage de l'isolant (10'') et l'élément cadre (27) sont disposés de telle manière que l'organe de découpage de l'isolant (10'') décrive, à partir d'une position de départ prédéterminée, exactement un tour complet ou exactement un multiple entier d'un tour complet, pour parvenir à une position finale identique à la position de départ en position angulaire.

5.- Dispositif selon l'une des revendications précédentes, caractérisé en ce que les parties en forme d'arc de cercle des organes à arête tranchante s'étendent dans une région ($\alpha$) de 180° à 340°.

6.- Dispositif selon l'une des revendications précédentes, caractérisé en ce qu'une paire d'organes à arête tranchante en forme d'arc de cercle voisins est formée par les régions marginales surélevées (III$\underline{b}$) d'une gorge circonférentielle (III$\underline{a}$') possédant un profil en arc de cercle concave et d'une profondeur donnée ($\underline{e}$).

7.- Dispositif selon la revendication 6, caractérisé en ce que les gorges circonférentielles (111$\underline{a}$') précitées sont disposées en alternance avec des gorges circonférentielles (121$\underline{a}$) de plus grande profondeur ($\underline{e}$ + $\underline{h}$).

8.- Dispositif selon l'une des revendications précédentes, caractérisé en ce que les organes à arête tranchante font saillie au-dessus des parties immédiatement voisines de l'organe de découpage de l'isolant (10'') de moins de l'épaisseur maximum ($\underline{b}$) d'un câble plat (1) introduit, de sorte que le câble plat (1) est pressé entre l'organe de découpage de l'isolant (10'') et l'organe d'appui (16'') pour améliorer son transport à travers le dispositif.

9.- Dispositif selon l'une des revendications précédentes, caractérisé en ce qu'au moins l'une des parois latérales (26A, 26B) de la cage (26) est munie d'une ouverture (136) dont au moins un bord est réalisé sous la forme d'une rangée de dents (136$\underline{a}$, 136b, 36).

10.- Dispositif selon l'une des revendications 2 à 9, caractérisé en ce que l'organe de découpage de l'isolant (10'') et l'organe d'appui (18'') sont tous deux munis d'une roue dentée d'entrainement (20) de chaque côté et en ce que de chaque côté, la cage (26) présente deux rangées de dents rectilignes (136$\underline{a}$, 136$\underline{b}$), chacune des roues dentées engrenant dans une roue dentée adjacente et dans une rangée de dents adjacente.

11.- Dispositif selon l'une des revendications précédentes, caractérisé en ce que, sur le cadre (27) est disposé un organe de guidage (27C) servant à guider un câble plat (1) à travailler.

12.- Dispositif selon l'une des revendications précédentes, caractérisé en ce que, sur la cage (26) est prévu un organe de butée (28) coopérant avec le cadre (27) et qui sert à fixer avec précision le déplacement du cadre (27) dans la cage.

**Fig. 1**

**Fig. 3**

**Fig. 2**

Fig. 4

Fig:5

Fig:7

Fig:6

0 089 074